# DEMANDE DE BREVET EUROPEEN

(11) **EP 3 739 481 A1**
(43) Date de publication de la demande: **18.11.2020**
(21) Numéro de dépôt: 20184323.2
(22) Date de dépôt: 08.02.2016
(51) Int. Cl.: G06F 21/12, G06F 21/44, G06F 21/57, G06F 21/60, G06F 21/62, B41J 2/175, G03G 15/00, H04L 9/00, G03G 21/16, H04L 9/08, H04L 9/32, G03G 15/08

(54) **SYSTEME DE PROTECTION AVANCEE D'ELEMENTS CONSOMMABLES OU DETACHABLES**

(30) Priorité: 06.02.2015 FR 1550958
(62) Demande divisionnaire de: 16705064.0
(71) Demandeur: Dover Europe Sàrl, 1214 Vernier (CH)
(72) Inventeur: BONNETON, Damien, 26730 Hostun (FR)
(74) Mandataire: Brevalex

(57) **Abrégé**

L'invention concerne un support de données (300') pour une imprimante à jet d'encre continu (CIJ), ce support de données comportant :
- des moyens (31, 32, 30) pour recevoir une 1^{ère} information aléatoire de l'imprimante,,
- des moyens (31) pour crypter cette 1^{ère} information aléatoire, par un 1^{er} algorithme de cryptage, et une 1^{ère} clé secrète, formant ainsi une 1^{ère} information aléatoire cryptée,
- des moyens (37, 31) de mémorisation mémorisant au moins une donnée concernant au moins un consommable, différent dudit support de données, ou au moins une pièce détachée que l'imprimante peut utiliser, et/ou au moins un logiciel que l'imprimante peut utiliser et/ou au moins un mode d'utilisation que l'imprimante peut mettre en œuvre et/ou des options de matériel ou d'un ou plusieurs périphérique(s) implémentés sur l'imprimante, et/ou des droits d'utilisation de l'imprimante et/ou, plus généralement, une ou des données spécifiques au fonctionnement de l'imprimante ;
- des moyens de communication avec l'imprimante, pour envoyer ladite 1^{ère} information aléatoire cryptée à l'imprimante, et pour envoyer ladite au moins une donnée à l'imprimante ou pour lecture de ladite au moins une donnée par l'imprimante.

## Description

### DOMAINE TECHNIQUE ET ART ANTÉRIEUR

L'invention concerne le domaine des imprimantes à jet d'encre continu (CIJ).

Elle concerne également un dispositif et un procédé pour sécuriser l'utilisation d'une telle imprimante et/ou l'utilisation de pièces détachées ou de consommables, par exemple de cartouches d'encre ou de solvant, mis en œuvre dans une telle imprimante.

Les imprimantes à jet d'encre continu (CIJ) sont bien connues dans le domaine du codage et du marquage industriel de produits divers, par exemple pour marquer des codes barre, la date de péremption sur des produits alimentaires, ou encore des références ou des repères de distance sur les câbles ou les tuyaux directement sur la chaine de production et à grande cadence. Ce type d'imprimante se trouve également dans certains domaines de la décoration où les possibilités d'impression graphique de la technologie sont exploitées.

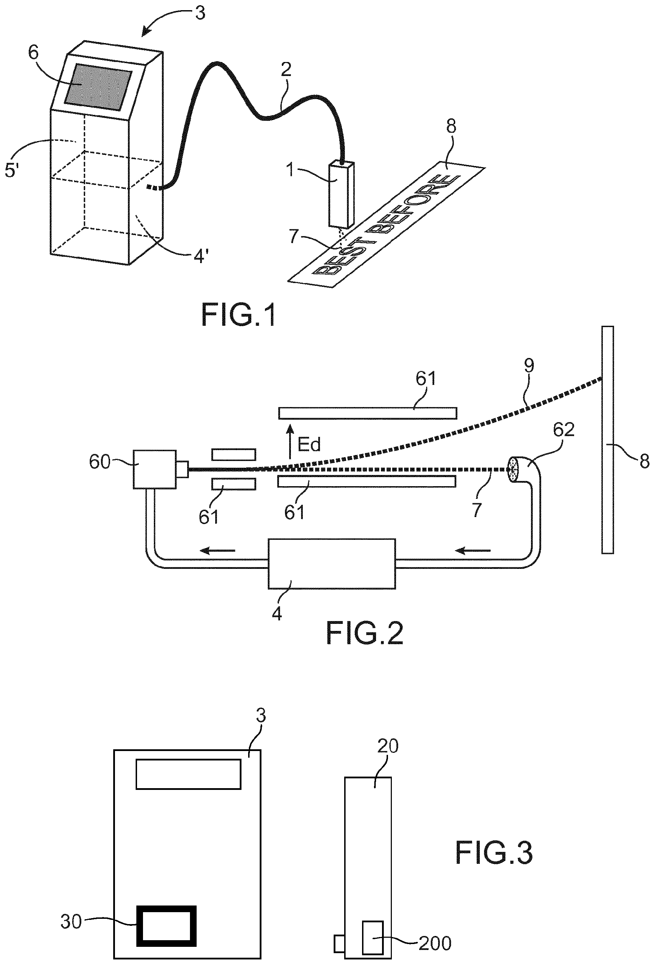

Ces imprimantes possèdent plusieurs sous-ensembles type comme le montre la figure 1.

Tout d'abord, une tête d'impression 1, généralement déportée par rapport au corps de l'imprimante 3, est reliée à celui-ci par un ombilic 2 souple rassemblant les liaisons hydrauliques et électriques nécessaires au fonctionnement de la tête en lui donnant une souplesse qui facilite l'intégration sur la ligne de production.

Le corps de l'imprimante 3 (encore appelé pupitre ou cabinet) contient habituellement trois sous-ensembles :
- un circuit d'encre dans la partie basse du pupitre (zone 4'), qui permet d'une part, de fournir de l'encre à la tête, à une pression stable et d'une qualité adéquate, et d'autre part de prendre en charge l'encre des jets, non utilisée pour l'impression,
- un contrôleur situé dans le haut du pupitre (zone 5'), capable de gérer les séquencements d'actions et de réaliser les traitements permettant l'activation des différentes fonctions du circuit d'encre et de la tête. Le contrôleur 5 peut comporter par exemple un micro-ordinateur ou un micro-processeur et/ou une (ou plusieurs) carte électronique et/ou au moins un logiciel embarqué, dont la programmation assure(nt) le pilotage du circuit d'encre 4 et de la tête d'impression 1. Ce contrôleur permet de transmettre les instructions d'impression à la tête mais aussi de piloter les moteurs et les vannes du système afin de gérer l'alimentation du circuit en encre et/ou en solvant ainsi que la récupération du mélange d'encre et d'air depuis la tête. Il est donc programmé à cet effet,
- une interface 6 qui donne à l'opérateur le moyen de mettre l'imprimante en œuvre et d'être informé sur son fonctionnement.

Autrement dit, le cabinet comporte 2 sous-ensembles : en partie haute, l'électronique, l'alimentation électrique et l'interface opérateur, et en partie basse un circuit d'encre fournissant l'encre, de qualité nominale, sous pression à la tête et la dépression de récupération de l'encre non utilisée par la tête.

La figure 2 représente schématiquement une tête 1 d'impression d'une imprimante CIJ. Elle comporte un générateur de gouttes 60 alimenté en encre électriquement conductrice, mise sous pression par le circuit d'encre.

Ce générateur est capable d'émettre au moins un jet continu au travers d'un orifice de petite dimension appelé buse. Le jet est transformé en une succession régulière de gouttes de taille identique sous l'action d'un système de stimulation périodique (non représenté) situé en amont de la sortie de la buse. Lorsque les gouttes 7 ne sont pas destinées à l'impression, elles se dirigent vers une gouttière 62 qui les récupère afin de recycler l'encre non utilisée et de les renvoyer dans le circuit d'encre.

Des dispositifs 61 placés le long du jet (électrodes de charges et de déflexion) permettent, sur commande, de charger électriquement les gouttes et de les défléchir dans un champ électrique Ed. Celles-ci sont alors déviées de leur trajectoire naturelle d'éjection du générateur de gouttes. Les gouttes 9 destinées à l'impression échappent à la gouttière et vont se déposer sur le support à imprimer 8.

Cette description peut s'appliquer aux imprimantes jets continus (CIJ) dites binaires ou jet continu multi-défléchi. Les imprimantes CIJ binaires sont équipées d'une tête dont le générateur de gouttes possède une multitude de jets, chaque goutte d'un jet ne peut être orientée que vers 2 trajectoires : impression ou récupération. Dans les imprimantes à jet continu multi-défléchi, chaque goutte d'un jet unique (ou de quelques jets espacés) peut être défléchie sur diverses trajectoires correspondant à des commandes de charge différentes d'une goutte à l'autre, réalisant ainsi un balayage de la zone à imprimer suivant une direction qui est la direction de déflexion, l'autre direction de balayage de la zone à imprimer est couverte par déplacement relatif de la tête d'impression et du support à imprimer 8. Généralement les éléments sont agencés de telle sorte que ces 2 directions soient sensiblement perpendiculaires.

Un circuit d'encre d'une imprimante à jet d'encre continu permet, d'une part, de fournir de l'encre sous pression régulée, et éventuellement du solvant, au générateur de gouttes de la tête 1 et, d'autre part, de créer une dépression pour récupérer les fluides non-utilisés pour l'impression et qui reviennent ensuite de la tête.

Il permet également la gestion des consommables (distribution d'encre et de solvant à partir d'une réserve) et le contrôle et le maintien de la qualité de l'encre (viscosité/concentration).

Enfin, d'autres fonctions sont liées au confort de l'utilisateur et à la prise en charge automatique de certaines opérations de maintenance afin de garantir un fonctionnement constant quelles que soient les conditions d'utilisation. Parmi ces fonctions on trouve le rinçage en solvant de la tête (générateur de gouttes, buse, gouttière), l'aide à la maintenance préventive, par exemple le remplacement de composants à durée de vie limité, notamment les filtres, et/ou les pompes.

Ces différentes fonctions ont des finalités et des exigences techniques très différentes. Elles sont activées et séquencées par le contrôleur de l'imprimante qui sera d'autant plus complexe que le nombre et la sophistication des fonctions seront grands.

Les consommables se présentent essentiellement sous la forme de cartouches ou de bouteilles, contenant l'encre ou le solvant adapté au fonctionnement de la machine.

Il existe divers moyens permettant d'identifier une telle cartouche ou bouteille.

On connait des solutions basées sur des moyens d'identification, comme par exemple décrit dans US6738903, mais elles ne permettent pas d'éviter le clonage ou l'émulation du tag mis en œuvre, en particulier dans le cas d'applications non raccordées au réseau.

On connait une autre solution par le document WO 97/28001.

Mais ces solutions ne résolvent pas le problème de pouvoir garantir le caractère authentique du consommable installé afin de pouvoir garantir le comportement de l'imprimante et les performances de l'impression (qualité, résistance,...).

On peut étendre ce problème à l'authentifications de pièces détachées et plus généralement aux éléments détachables des imprimantes ou encore aux logiciels que l'imprimante peut utiliser et/ou aux modes de fonctionnement que l'imprimante peut mettre en œuvre.

Un autre problème est celui de pouvoir configurer une imprimante à jet d'encre de manières diverses, sans réaliser de modification de l'imprimante elle-même. Des configurations différentes, avec des modes d'utilisation différents, peuvent être rendues nécessaires par des besoins techniques différents.

Ces problèmes se posent dans un contexte où les imprimantes ne sont en général pas raccordées à un réseau de communication.

### EXPOSÉ DE L'INVENTION

L'invention concerne notamment un système d'authentification basé sur une clé secrète (ou clé d'authentification).

L'invention concerne d'abord un procédé d'authentification d'un 1^{er} élément consommable ou détachable d'une imprimante à jet d'encre continu (CIJ), comportant un 1^{er} procédé d'authentification (ou 1^{ère} authentification) :
- la génération, par le contrôleur (ou circuit ou dispositif de contrôle ; dans la suite on utilise plus souvent le terme « contrôleur ») de l'imprimante, d'une 1^{ère} information aléatoire, et son envoi à un circuit d'authentification du 1^{er} élément consommable, ce circuit étant par exemple appliqué à l'élément,
- le cryptage de cette 1^{ère} information aléatoire, par ce circuit d'authentification du 1^{er} élément consommable, à l'aide d'un 1^{er} algorithme de cryptage et d'une 1^{ère} clé secrète, formant ainsi une 1^{ère} information aléatoire cryptée, et son envoi au contrôleur de l'imprimante,
- le cryptage de cette 1^{ère} information aléatoire, par le contrôleur de l'imprimante, à l'aide d'un 2^{ème} algorithme de cryptage et d'une 2^{ème} clé secrète, formant ainsi une 2^{ème} information aléatoire cryptée,
- la comparaison, de préférence par le contrôleur de l'imprimante, de la 1^{ère} information aléatoire cryptée et de la 2^{ème} information aléatoire cryptée, pour authentifier, ou pas, le 1^{er} élément consommable.

Si la comparaison est satisfaisante, les 2 algorithmes et les 2 clés se correspondent, ils sont par exemple identiques (les 2 algorithmes sont identiques et les 2 clés également), et l'élément consommable ou détachable est authentifié et peut être utilisé. Sinon, son utilisation est rendue impossible par le contrôleur (aucune donnée ne peut être échangée entre l'élément consommable et le contrôleur).

Si le 1^{er} élément consommable est authentifié, une 3^{ème} clé, dite clé partagée, ou au moins une partie d'une 3^{ème} clé, dite clé partagée, peut être envoyée par le 1^{er} élément consommable ou détachable à l'imprimante à jet d'encre continu.

Dans ce mode de réalisation ou dans les suivants, qu'il s'agisse d'un procédé ou d'un dispositif de contrôle ou d'un élément consommable, lorsqu'une partie seulement de la clé partagée est envoyée, à l'imprimante ou à un dispositif de contrôle ou au consommable, une autre partie de cette clé est déjà contenue dans l'imprimante dans le dispositif de contrôle ou dans le consommable, les 2 parties formant la clé partagée.

L'imprimante, ou son contrôleur, contient alors de préférence un 3^{ème} algorithme de cryptage, et éventuellement une partie de la clé partagée ; le 3^{ème} algorithme peut mettre en œuvre ladite clé partagée, une fois tout ou partie de celle-ci reçue.

Selon une réalisation particulière, ce procédé peut comporter en outre une 2^{ème} authentification:
- la génération, par le circuit d'authentification du 1^{er} élément consommable ou détachable, d'une 2^{ème} information aléatoire, et son envoi au contrôleur de l'imprimante,
- le cryptage de cette 2^{ème} information aléatoire, par le contrôleur de l'imprimante à l'aide du 2^{eme} algorithme de cryptage et de la 2^{ème} clé secrète, formant ainsi une 3^{ème} information aléatoire cryptée, et son envoi au circuit d'authentification du 1^{er} élément consommable,
- le cryptage de cette 2^{ème} information aléatoire, par le circuit d'authentification du 1^{er} élément consommable, par le 1^{er} algorithme de cryptage et par la 1^{ère} clé secrète, formant ainsi une 4^{ème} information aléatoire cryptée,
- la comparaison, de préférence par le circuit d'authentification du 1^{er} élément consommable ou détachable, de la 3^{ème} information aléatoire cryptée et de la 4^{ème} information aléatoire cryptée.

Là encore, si la comparaison est satisfaisante, l'élément consommable ou détachable ou l'imprimante est authentifié(e) et peut être utilisé(e). Sinon, l'élément consommable, ou détachable, ne reconnaissant pas le contrôleur ou l'imprimante, peut refuser la communication avec le contrôleur ou l'imprimante, et donc tout échange ultérieur de données.

Autrement dit, la comparaison, d'une part de la 1^{ère} information aléatoire cryptée et de la 2^{ème} information aléatoire cryptée, et, d'autre part, de la 3^{ème} information aléatoire cryptée et de la 4^{ème} information aléatoire cryptée permet d'authentifier le 1^{er} élément consommable par l'imprimante et l'imprimante par le 1^{er} élément consommable.

La comparaison, d'une part de la 1^{ère} information aléatoire cryptée et de la 2^{ème} information aléatoire cryptée, et, d'autre part, de la 3^{ème} information aléatoire cryptée et de la 4^{ème} information aléatoire cryptée permet d'authentifier réciproquement, ou pas, le 1^{er} élément consommable et l'imprimante, le procédé pouvant comporter ensuite, si l'authentification réciproque est effectuée ou validée, au moins une partie d'une 3^{ème} clé, dite clé partagée, peut être envoyée par le 1^{er} élément consommable ou détachable à l'imprimante à jet d'encre continu.

La 2^{ème} authentification (ou 2^{ème} procédé d'authentification) peut avoir lieu préalablement au 1^{er} procédé d'authentification déjà présenté ci-dessus, ou postérieurement, ou simultanément à celui-ci.

Plus généralement, l'invention concerne un procédé d'authentification d'un 1^{er} élément consommable ou détachable d'une imprimante à jet d'encre continu (CIJ), comportant, dans cet ordre ou un ordre inverse (ou simultanément) :
- une étape d'authentification d'un élément consommable par l'imprimante (1^{er} procédé d'authentification);
- une étape d'authentification de l'imprimante par l'élément consommable (2^{ème} procédé d'authentification).

Ainsi, l'invention concerne aussi un procédé d'authentification mutuel d'un 1^{er} élément consommable ou détachable et d'une imprimante à jet d'encre continu (CIJ), et d'échange de données entre ceux-ci, comportant, dans cet ordre ou un ordre inverse ou simultanément, une première authentification et une deuxième authentification:
A) la première authentification comportant :
   a) - la génération, par le contrôleur de l'imprimante, d'une 1^{ère} information aléatoire, et son envoi à un circuit d'authentification du 1^{er} élément consommable,
   b) - le cryptage de cette 1^{ère} information aléatoire, par ce circuit d'authentification du 1^{er} élément consommable, par un 1^{er} algorithme de cryptage, et une 1^{ère} clé secrète, formant ainsi une 1^{ère} information aléatoire cryptée, et son envoi au contrôleur de l'imprimante,
   c) - le cryptage de cette 1^{ère} information aléatoire, par le contrôleur de l'imprimante, par un 2^{ème} algorithme de cryptage, et une 2^{ème} clé secrète, formant ainsi une 2^{ème} information aléatoire cryptée,
   d) - la comparaison, au moins, de la 1^{ère} information aléatoire cryptée et de la 2^{ème} information aléatoire cryptée ;
   e) une étape d'authentification, en fonction du résultat de la comparaison de l'étape d),
B) la deuxième authentification comportant :
   f) -la génération, par le circuit d'authentification du 1^{er} élément consommable, d'une 2^{ème} information aléatoire, et son envoi au contrôleur de l'imprimante,
   g) - le cryptage de cette 2^{ème} information aléatoire, par le contrôleur de l'imprimante, par le 2^{ème} algorithme de cryptage, et la 2^{ème} clé secrète, formant ainsi une 3^{ème} information aléatoire cryptée, et son envoi au circuit d'authentification du 1^{er} élément consommable,
   h) - le cryptage de cette 2^{ème} information aléatoire, par le circuit d'authentification du 1^{er} élément consommable, par le 1^{er} algorithme de cryptage, et la 1^{ère} clé secrète, formant ainsi une 4^{ème} information aléatoire cryptée,
   i) - la comparaison de la 3^{ème} information aléatoire cryptée et de la 4^{ème} information aléatoire cryptée ;
   j) une étape d'authentification, en fonction du résultat de la comparaison de l'étape i),
   k) le contrôleur de l'imprimante contenant un 3^{ème} algorithme de cryptage, et une 3^{ème} clé, dite clé partagée, l'élément consommable ou détachable, après la première authentification et la deuxième authentification, envoyant à l'imprimante à jet d'encre continu, ou recevant de celle-ci, au moins une donnée cryptée à l'aide de ce 3^{ème} algorithme de cryptage, et de cette clé partagée.

Quelle que soit la réalisation, après authentification (par exemple par comparaison de la 1^{ère} information aléatoire cryptée et de la 2^{ème} information aléatoire cryptée et éventuellement de la 3^{ème} information aléatoire cryptée et de la 4^{ème} information aléatoire cryptée), ou après les 2 étapes d'authentification, le procédé peut ensuite comporter:
a) - l'envoi d'au moins une partie d'une 3^{ème} clé, dite clé partagée, par le 1^{er} élément consommable ou détachable à l'imprimante à jet d'encre continu ou réciproquement; l'imprimante comporte un 3^{ème} algorithme de cryptage, qui permettra, à l'aide de cette 3^{ème} clé partagée, de décrypter des données transmises du consommable à l'imprimante ;
b) - et/ou l'envoi, par l'élément consommable, ou, respectivement, par l'imprimante à jet d'encre continu, à l'imprimante à jet d'encre continu, ou, respectivement, à l'élément consommable, d'au moins une donnée cryptée, l'imprimante, ou, respectivement, l'élément consommable, pouvant éventuellement comporter un 3^{ème} algorithme de cryptage, et une clé partagée (cette dernière peut avoir été envoyée, au moins en partie, par le consommable, selon l'étape a) précédente), qui permettent de décrypter ladite donnée.

L'invention concerne également un procédé d'authentification d'un élément consommable ou détachable d'une imprimante à jet d'encre continu (CIJ), comportant :
- l'envoi au contrôleur de l'imprimante, par le circuit d'authentification de l'élément consommable ou détachable, d'un mot de passe,
- la comparaison, par le contrôleur, de ce mot de passe avec un mot de passe qu'il contient (et qui est par exemple enregistré dans des moyens de mémorisation du contrôleur).

Si la comparaison est satisfaisante l'utilisation du consommable, et/ou d'un élément logiciel, peut être autorisée.

L'invention concerne également un procédé d'échange de données entre un élément consommable ou détachable d'une imprimante à jet d'encre continu (CIJ), et cette imprimante à jet d'encre continu (CIJ), dans lequel :
- on réalise, un procédé d'authentification de cet élément consommable ou détachable pour cette imprimante à jet d'encre continu, selon l'un des modes de réalisation de l'invention,
- et, après comparaison de la 1^{ère} information aléatoire cryptée et de la 2^{ème} information aléatoire cryptée et, éventuellement, la comparaison de la 3^{ème} information aléatoire cryptée et de la 4^{ème} information aléatoire cryptée, tout ou partie d'une 3^{ème} clé, dite clé partagée, est envoyée par l'élément consommable ou détachable à l'imprimante à jet d'encre continu.

La clé partagée peut ensuite être utilisée pour décoder, à l'aide d'un 3^{ème} algorithme de cryptage contenu dans l'imprimante, tout ou partie d'une ou plusieurs donnée(s) ou information(s) en provenance de l'élément consommable ou détachable. Ce 3^{ème} algorithme de cryptage peut être différent des 1^{er} et 2^{ème} algorithmes de cryptage déjà présentés ci-dessus.

Pour renforcer la sécurité, le procédé met en œuvre la ou les clé(s) secrète(s), qui, par l'authentification, ne fait (ou ne font) qu'autoriser l'échange ultérieur de données entre l'élément consommable ou détachable et la machine.

Dès lors que la clé partagée est disponible dans l'imprimante (ou dans son circuit) [par exemple après envoi, selon l'un des modes de réalisation ci-dessus qui le prévoient, d'une clé partagée, ou d'au moins une partie de celle-ci, par l'élément consommable ou détachable à l'imprimante à jet d'encre continu] au moins une donnée cryptée, par exemple par le 3^{ème} algorithme de cryptage, peut être envoyée de l'élément consommable ou détachable à l'imprimante à jet d'encre continu ou inversement; ou encore cette donnée cryptée peut être lue par le contrôleur.

Plus simplement, dans le cas d'une authentification par mot de passe, après échange et contrôle du mot de passe, au moins une donnée, éventuellement cryptée, par exemple par un algorithme de cryptage, peut être envoyée de l'élément consommable ou détachable à l'imprimante à jet d'encre continu ou inversement. Ici, comme dans les autres réalisations d'un procédé (d'authentification et/ou d'échange de données) selon l'invention ou d'un dispositif (ou d'un contrôleur ou d'un support de données) selon l'invention ou d'un élément consommable ou détachable selon l'invention, cette donnée peut être l'une de celles mentionnées plus loin (par exemple concernant au moins un consommable ou au moins une pièce détachée que l'imprimante peut utiliser, et/ou concernant au moins une liste de logiciels que l'imprimante peut utiliser, et/ou concernant au moins un mode d'utilisation que l'imprimante peut mettre en œuvre,...etc). Dans le cas d'une donnée cryptée le contrôleur dispose aussi des moyens pour décrypter les données. Après réalisation d'un procédé d'authentification selon l'invention, l'élément consommable ou détachable peut envoyer à l'imprimante à jet d'encre continu, ou recevoir de celle-ci, au moins une donnée cryptée à l'aide d'un algorithme de cryptage, et de la clé partagée.

L'invention concerne également un procédé d'échange de données entre un élément consommable ou détachable d'une imprimante à jet d'encre continu, et cette imprimante à jet d'encre continu, sans processus d'authentification préalable, mais en utilisant un élément consommable, ou détachable, du type déjà décrit ci-dessus (ou plus loin dans cette demande), celui-ci pouvant comporter des moyens pour mettre en œuvre un 1^{er} algorithme de cryptage, et une 1^{ère} clé secrète, permettant une authentification mutuelle, ainsi qu'un 2^{ème} algorithme de cryptage et une clé, dite partagée, l'imprimante à jet d'encre continu, comportant des moyens pour mettre également en œuvre le 2^{ème} algorithme de cryptage, et la clé partagée, procédé dans lequel :
- au moins une donnée est transférée entre l'élément consommable ou détachable et l'imprimante à jet d'encre continu, par exemple envoyée par l'élément consommable ou détachable à l'imprimante, ou lue par l'imprimante,
- l'imprimante à jet d'encre continu décrypte la ou les données ainsi reçues.

Autrement dit, on peut utiliser un élément consommable ou détachable selon l'invention, notamment du type déjà décrit ci-dessus ou qui sera décrit plus loin, avec une imprimante dont le contrôleur ne peut pas mettre en œuvre un procédé d'authentification du type déjà décrit ci-dessus, ou avec une imprimante dont le contrôleur peut mettre en œuvre un procédé d'authentification du type déjà décrit ci-dessus.

La clé partagée utilisée par, ou qui met en œuvre, l'algorithme de cryptage, peut être variable dans le temps et/ou être d'une durée de validité limitée.

Selon une réalisation de l'un des procédés selon l'invention, la 1^{ère} clé secrète et/ou, respectivement, la 2^{ème} clé secrète, est, ou a été, modifiée à l'aide d'un algorithme mettant en œuvre une donnée numérique disponible dans, ou associée à, respectivement l'élément consommable ou détachable ou l'imprimante à jet d'encre continu.

La clé partagée peut être, ou peut avoir été, modifiée à l'aide d'un algorithme mettant en œuvre une donnée numérique disponible dans, ou associée à, l'élément consommable ou détachable ou l'imprimante à jet d'encre continu.

Un procédé selon l'invention peut comporter en outre l'échange, entre le contrôleur et le 1^{er} élément consommable ou détachable, et/ou la lecture, par exemple, ou notamment, par le contrôleur de l'imprimante, et/ou par le 1^{er} élément consommable ou détachable, d'au moins une donnée (qui peut être échangée en tant que donnée cryptée, selon ce qui a été exposé ci-dessus, après authentification du 1^{er} élément consommable ou détachable) :
- concernant au moins un 2^{ème} ou un autre consommable, différent du 1er consommable, et/ou au moins une pièce détachée que l'imprimante peut utiliser, puis, éventuellement, la comparaison, avec ladite au moins une donnée échangée ou lue, d'au moins une donnée d'identification d'un 2^{ème}, ou d'un autre, consommable, différent du 1er consommable, et/ou d'une pièce détachée, par exemple, dans un cas particulier, de celui muni du circuit d'identification , et/ou l'autorisation, ou non, par le contrôleur de l'imprimante, de l'utilisation de ce consommable ou de cette pièce détachée,
- et/ou concernant au moins une liste de logiciels que l'imprimante peut utiliser, puis, éventuellement, la comparaison, avec ladite au moins une donnée échangée ou lue, d'au moins une donnée d'identification d'un logiciel avec cette liste, et/ou l'autorisation, ou non, par le contrôleur de l'imprimante, de l'utilisation de ce logiciel ; dans ce cas, l'élément (par exemple un logiciel) que l'on peut autoriser, ou pas, est différent du consommable qui porte le circuit d'identification,
- et/ou concernant au moins un mode d'utilisation que l'imprimante peut mettre en œuvre, et, éventuellement, l'adaptation du mode de fonctionnement de l'imprimante.

Un procédé selon l'invention peut comporter en outre:
- l'échange, entre le contrôleur et le 1^{er} élément consommable ou détachable, et/ou la lecture, par le contrôleur et/ou le 1^{er} élément consommable ou détachable, d'au moins une donnée concernant au moins un 2^{ème} élément consommable ou détachable ou au moins une pièce détachée que l'imprimante peut utiliser, et/ou au moins un logiciel que l'imprimante peut utiliser, et/ou au moins un mode d'utilisation que l'imprimante peut mettre en œuvre,
- puis, éventuellement :
   * une comparaison d'au moins une donnée d'identification, respectivement d'un consommable ou d'une pièce détachée et/ou d'un logiciel, avec ladite au moins une donnée lue ou échangée, relative respectivement à au moins un 2^{ème} élément consommable ou au moins une pièce détachée que l'imprimante peut utiliser, et/ou au moins un logiciel que l'imprimante peut utiliser, et/ou l'autorisation, ou non, de l'utilisation de ce consommable ou de cette pièce détachée et/ou de ce logiciel,
   * et/ou une comparaison d'au moins un mode d'utilisation que l'imprimante peut mettre en œuvre, avec ladite au moins une donnée lue ou échangée, relative respectivement à au moins un mode d'utilisation que l'imprimante peut mettre en œuvre et l'adaptation du mode de fonctionnement de l'imprimante.

Un dispositif (contrôleur, ou dispositif de contrôle d'une imprimante, ou support de données) selon l'invention, tel que décrit plus loin, permet de mémoriser une ou plusieurs donnée(s) de ce type.

Au moins une partie de la 2^{ème} clé secrète et/ou de l'éventuelle clé partagée et/ou des données échangées ou à échanger peut être mémorisée sur une carte, ou un support de données, physiquement séparée de l'imprimante et du 1^{er} élément consommable ou détachable, et qui échange, par exemple par RFID ou par contact, des données avec l'imprimante à l'aide de moyens de communication, prévus d'une part sur la carte, ou le support de données, et d'autre part dans l'imprimante.

D'une manière générale, des données peuvent être échangées entre l'imprimante et un circuit de l'élément consommable ou détachable. Les données peuvent être échangées par RFID ou par contact. Cette carte, ou ce support de données, peut donc transmettre à l'imprimante au moins une partie de la 2^{ème} clé secrète et/ou de l'éventuelle clé partagée et/ou des données.

Le 1^{er} élément consommable ou détachable, et/ou tout autre élément consommable ou détachable, peut être une cartouche d'encre ou de solvant ou un filtre, ou une pompe, ou une électrovanne, ou un élément amovible, par exemple du circuit d'encre de l'imprimante ou de la tête d'impression, ou encore une carte ou un support de données.

Dans une réalisation particulière, le 1^{er} élément consommable ou détachable est un support de données, au moins un autre élément consommable ou détachable, différent du 1^{er}, ou au moins une pièce détachée étant une cartouche d'encre ou de solvant ou un filtre, ou une pompe, ou une électrovanne, ou un module amovible, par exemple du circuit d'encre de l'imprimante ou d'une tête d'impression de l'imprimante, ou un logiciel ou une fonctionnalité de la machine d'impression.

Dans ce cas, il y a:
- authentification, par le contrôleur de l'imprimante, du support de données,
- échange, entre le support de données et le contrôleur, ou lecture, par le contrôleur, dans le support, d'au moins une donnée relative à l'utilisation d'au moins un autre élément consommable ou détachable, différent du support de données, ou d'une pièce détachée (par exemple de type déjà décrit ci-dessus) et/ou d'au moins un logiciel que l'imprimante peut utiliser et/ou d'au moins un mode d'utilisation que l'imprimante peut mettre en œuvre,
- éventuellement, authentification, par ledit contrôleur de l'imprimante, d'un élément consommable ou détachable, différent du support de données, ou d'une pièce détachée,
- puis, éventuellement :
   * une comparaison, par ledit contrôleur, d'au moins une donnée d'identification, respectivement d'un consommable ou d'une pièce détachée et/ou d'un logiciel, avec ladite au moins une donnée lue ou échangée, et/ou l'autorisation, ou non, par le contrôleur, de l'utilisation de ce consommable ou de cette pièce détachée et/ou de ce logiciel,
   * et/ou une comparaison, par ledit contrôleur, d'au moins un mode d'utilisation que l'imprimante peut mettre en œuvre, avec ladite au moins une donnée lue ou échangée, relative respectivement à au moins un mode d'utilisation (ou d'une donnée qui lui est relatif) que l'imprimante peut mettre en œuvre et, éventuellement, l'adaptation du mode de fonctionnement de l'imprimante (par exemple, en fonction du résultat de la comparaison, par utilisation, ou pas, de ce mode d'utilisation).

L'invention concerne également un contrôleur ou un dispositif de contrôle, d'une imprimante à jet d'encre, ou un support de données en vue du contrôle d'une imprimante à jet d'encre continu (CIJ), mettant en œuvre un procédé tel que décrit ci-dessus. Un tel contrôleur ou dispositif, ou support de données, comporte des moyens pour, au moins :
- générer une 1^{ère} information aléatoire, et l'envoyer, par exemple à un circuit d'authentification d'un 1^{er} élément consommable,
- crypter cette 1^{ère} information aléatoire, à l'aide d'un 2^{ème} algorithme de cryptage et d'une 2^{ème} clé secrète, formant ainsi une 2^{ème} information aléatoire cryptée,
- recevoir une 1^{ère} information aléatoire cryptée, par exemple d'un 1^{er} élément consommable (cette 1^{ère} information aléatoire cryptée peut avoir été obtenue par cryptage de la 1^{ère} information aléatoire à l'aide d'un 1^{er} algorithme de cryptage et d'une 1^{ère} clé secrète),
- comparer ladite 1^{ère} information aléatoire cryptée reçue et la 2^{ème} information aléatoire cryptée.

Le contrôleur peut ainsi authentifier, ou pas, le 1^{er} élément consommable, en fonction de la comparaison ainsi réalisée.

L'invention concerne également un contrôleur, ou un dispositif, ou un support de données, de contrôle d'une imprimante à jet d'encre continu, pour l'authentification d'un élément consommable ou détachable d'une imprimante à jet d'encre continu (CIJ), comportant :
- des moyens pour générer une information aléatoire, et des moyens pour l'envoyer à un circuit extérieur, par exemple un circuit d'authentification de l'élément,
- des moyens pour crypter cette information aléatoire, par un 1^{er} algorithme de cryptage, et par une 1^{ère} clé secrète, formant ainsi une information aléatoire cryptée,
- des moyens pour comparer cette information aléatoire cryptée et une autre information aléatoire cryptée reçue d'un circuit extérieur, par exemple d'un élément consommable ou détachable.

Eventuellement, ces moyens peuvent permettre de conclure à l'autorisation d'utilisation, ou non, d'un élément consommable ou détachable et/ou à l'authentification, ou non, du consommable en fonction du résultat de la comparaison. En cas d'absence d'authentification, aucune donnée ne peut être échangée entre l'élément consommable et le contrôleur.

Le contrôleur ou le dispositif, ou le support de données, peut comporter des moyens pour recevoir au moins une partie d'une clé, dite clé partagée, envoyé par un circuit, par exemple par ledit élément consommable ou détachable.

Le contrôleur ou le dispositif, ou le support de données, peut comporter des moyens de mémorisation de ladite 2^{ème} clé, dite clé partagée, et un 2^{ème} algorithme, dit de décryptage, qui va mettre en œuvre ladite clé partagée, lorsque celle-ci aura été reçue, complètement ou partiellement.

Le contrôleur ou le dispositif, ou le support de données, peut en outre comporter :
- des moyens pour recevoir au moins une 2^{ème} information aléatoire, par exemple dudit élément consommable ou détachable ;
- des moyens pour crypter cette 2^{ème} information aléatoire, par ledit 1^{er} algorithme de cryptage, et ladite 1^{ère} clé secrète, formant ainsi une 3^{ème} information aléatoire cryptée,
- des moyens pour envoyer cette 3^{ème} information aléatoire cryptée à un circuit, par exemple à l'élément consommable, ou des moyens pour comparer cette 3^{ème} information aléatoire cryptée et une 4^{ème} information aléatoire cryptée reçue d'un circuit extérieur, par exemple dudit l'élément ; la 4^{ème} information aléatoire cryptée peut résulter d'un cryptage de la 2^{ème} information aléatoire à l'aide d'une 2^{ème} clé secrète et d'un 2^{ème} algorithme de cryptage ;
- éventuellement : des moyens pour authentifier, ou pas, un élément consommable en fonction du résultat de la comparaison entre la 1^{ère} information aléatoire cryptée et la 2^{ème} information aléatoire cryptée et, éventuellement, entre la 3^{ème} information aléatoire cryptée et la 4^{ème} information aléatoire cryptée.

D'une manière générale, de préférence, dans un procédé ou dans un dispositif (contrôleur ou circuit ou carte ou support de données) ou dans un élément consommable ou détachable selon l'invention, chaque authentification (la 1^{ère} et 2^{ème} dans les exemples ci-dessus) est effectuée par le composant qui l'a déclenchée (ou qui a envoyé l'information aléatoire - non encore cryptée - à l'autre composant; donc, respectivement, par l'imprimante et par le consommable dans les exemples ci-dessus) ; dans le cas de 2 authentifications, l'utilisation du consommable ne pourra se faire que si les 2 authentifications sont valides. Autrement dit, lorsqu'on est dans le cas d'une imprimante et d'un élément consommable (ou détachable) et qu'une double authentification est mise en œuvre, c'est, de préférence, l'imprimante qui authentifie le consommable et le consommable qui authentifie l'imprimante.

Le contrôleur ou le dispositif, ou le support de données, peut en outre comporter des moyens pour recevoir d'un circuit extérieur, par exemple d'un élément consommable, au moins une donnée cryptée et des moyens pour décrypter ladite donnée à l'aide d'un algorithme de cryptage, et d'une clé, dite clé partagée. Des exemples de telles données ont déjà été donnés ci-dessus.

Un contrôleur ou dispositif ou support de données selon l'invention peut comporter en outre des moyens de type RFID ou des moyens d'échange de données par contact, pour échanger des données avec un circuit, par exemple d'un élément consommable ou détachable de l'imprimante et/ou avec un support de données, lui-même muni de moyens de type RFID ou des moyens d'échange de données par contact.

Selon une réalisation particulière la 2^{ème} clé peut être variable dans le temps, et/ou comporter des moyens pour la faire varier, ou faire varier son contenu, dans le temps.

Comme déjà mentionné précédemment, un tel contrôleur ou dispositif ou support de données peut comporter en outre des moyens pour :
- mémoriser au moins une donnée, ou une liste de données, concernant au moins un élément consommable ou détachable (par exemple un 2^{ème} élément consommable ou détachable, différent du 1^{er} premier) ou au moins une pièce détachée que l'imprimante peut utiliser et/ou au moins un logiciel que l'imprimante peut utiliser, et/ou au moins un mode d'utilisation que l'imprimante peut mettre en œuvre,
- et, éventuellement, pour :
- comparer au moins une donnée d'identification d'un consommable et/ou d'une pièce détachée et/ou d'un logiciel avec ladite donnée ou ladite liste,
- et/ou comparer au moins un mode d'utilisation, avec ladite au moins une donnée mémorisée concernant au moins un mode d'utilisation que l'imprimante peut mettre en œuvre,
- et/ou autoriser, ou non, l'utilisation de ce consommable ou de cette pièce détachée ou de ce logiciel ou de ce mode d'utilisation, en fonction du résultat de la comparaison précédente.

Un tel contrôleur ou dispositif de contrôle d'une imprimante à jet d'encre continu (CIJ), peut permettre l'authentification d'un élément consommable ou détachable d'une imprimante à jet d'encre continu (CIJ), et comporter :
- des moyens pour authentifier, selon un procédé tel que déjà décrit ci-dessus, un support de données (le consommable du procédé d'authentification ci-dessus est alors, ou est remplacé par, un support de données),
- des moyens pour recevoir, dudit support de données, ladite au moins une donnée concernant au moins un consommable (autre que le support de données) ou au moins une pièce détachée que l'imprimante peut utiliser, et/ou au moins un logiciel que l'imprimante peut utiliser et/ou au moins un mode d'utilisation que l'imprimante peut mettre en œuvre.

L'invention concerne également un élément consommable ou détachable d'une imprimante à jet d'encre continu (CIJ), comportant des moyens pour mettre en œuvre un procédé tel que déjà décrit ci-dessus. Ces moyens permettent au moins :
- de générer une information aléatoire, et de l'envoyer à un circuit extérieur, par exemple d'un contrôleur d'une imprimante, ou de recevoir une information aléatoire, par exemple du contrôleur d'une imprimante,
- de crypter cette information aléatoire, par un 1^{er} algorithme de cryptage et par une 1^{ère} clé secrète, formant ainsi une information aléatoire cryptée,
- de comparer cette information aléatoire cryptée et une autre information aléatoire cryptée reçue, par exemple d'un contrôleur d'une imprimante.

L'invention concerne également un élément consommable ou détachable, pour une imprimante à jet d'encre continu (CIJ), comportant :
- des moyens pour générer une information aléatoire, et des moyens pour l'envoyer à un circuit extérieur, par exemple d'un contrôleur d'une imprimante, ou des moyens pour recevoir une information aléatoire, par exemple du contrôleur d'une imprimante,
- des moyens pour crypter cette information aléatoire, par un 1^{er} algorithme de cryptage et par une 1^{ère} clé secrète, formant ainsi une information aléatoire cryptée,
- des moyens pour comparer cette information aléatoire cryptée et une autre information aléatoire cryptée reçue, par exemple d'un contrôleur d'une imprimante.

Un élément consommable ou détachable selon l'invention peut comporter des moyens pour authentifier, ou pas, ladite imprimante en fonction du résultat de la comparaison.

Un élément consommable ou détachable pour une imprimante à jet d'encre continu (CIJ), peut en outre comporter :
- des moyens pour recevoir au moins une 2^{ème} information aléatoire, par exemple de ladite imprimante;
- des moyens pour crypter cette 2^{ème} information aléatoire, par ledit 1^{er} algorithme de cryptage, et ladite 1^{ère} clé secrète, formant ainsi une 3^{ème} information aléatoire cryptée,
- des moyens pour envoyer cette 3^{ème} information aléatoire cryptée, par exemple à l'imprimante, ou des moyens pour comparer cette 3^{ème} information aléatoire cryptée et une 4^{ème} information aléatoire cryptée reçue par exemple de l'imprimante; cette 4^{ème} information aléatoire cryptée peut être obtenue par cryptage de la 2^{ème} information aléatoire à l'aide d'un 2^{ème} algorithme de cryptage et une 2^{ème} clé secrète stockés dans l'imprimante ;
- éventuellement : des moyens pour authentifier, ou pas, l'imprimante en fonction du résultat de la comparaison entre la 1^{ère} information aléatoire cryptée et la 2^{ème} information aléatoire cryptée et, éventuellement, entre la 3^{ème} information aléatoire cryptée et la 4^{ème} information aléatoire cryptée.

Un élément consommable ou détachable selon l'invention peut en outre comporter des moyens pour envoyer au moins une donnée à l'imprimante, cryptée à l'aide d'un algorithme de cryptage, et d'une clé, dite clé partagée.

Un élément consommable ou détachable selon l'invention peut en outre comporter des moyens pour recevoir au moins une partie d'une 2^{ème} clé, dite clé partagée, par exemple envoyée par ladite imprimante à l'élément consommable ou détachable, ou pour envoyer au moins une partie d'une 2^{ème} clé, dite clé partagée, par exemple à ladite imprimante.

Quelle que soit la réalisation de cet élément consommable ou détachable, ses moyens peuvent éventuellement permettre de conclure à l'autorisation d'utilisation, ou non, de l'élément consommable ou détachable et/ou de l'imprimante. En cas d'absence d'authentification, aucune donnée ne peut être échangée entre l'élément consommable et le contrôleur. Un tel élément peut comporter des moyens de mémorisation d'une 2^{ème} clé, dite clé partagée, et d'un 2^{ème} algorithme de cryptage, qui peut être variable dans le temps. Un tel élément peut comporter des moyens pour envoyer une clé, dite clé partagée, et/ou un algorithme, dit de cryptage et de décryptage, par exemple à un contrôleur d'une imprimante, ou pour recevoir une telle clé, par exemple d'un tel contrôleur.

Un tel élément peut comporter des moyens de type RFID ou des moyens d'échange de données par contact, pour échanger par exemple avec un contrôleur d'une imprimante lui-même muni de moyens de type RFID ou des moyens d'échange de données par contact.

L'invention concerne également une imprimante à jet d'encre continu, comportant :
- un circuit d'encre,
- une tête d'impression,
- des moyens de liaison hydraulique entre le circuit d'encre et la tête d'impression,
- des moyens de liaison électrique pour alimenter électriquement ladite tête d'impression,
- des moyens pour mettre en œuvre un procédé selon l'invention, par exemple un procédé d'authentification d'un élément consommable ou détachable, tel que décrit ci-dessus.

De tels moyens permettent de:
- générer une 1^{ère} information aléatoire, et de l'envoyer, par exemple à un circuit d'authentification d'un 1^{er} élément consommable,
- crypter cette 1^{ère} information aléatoire, à l'aide d'un 2^{ème} algorithme de cryptage et d'une 2^{ème} clé secrète, formant ainsi une 2^{ème} information aléatoire cryptée,
- recevoir une 1^{ère} information aléatoire cryptée, par exemple d'un 1^{er} élément consommable (cette 1^{ère} information aléatoire cryptée peut avoir été obtenue par cryptage de la 1^{ère} information aléatoire à l'aide d'un 1^{er} algorithme de cryptage et d'une 1^{ère} clé secrète) ;
- comparer ladite 1^{ère} information aléatoire cryptée reçue et la 2^{ème} information aléatoire cryptée.

Ces moyens peuvent ainsi authentifier, ou pas, le 1^{er} élément consommable.

L'invention concerne également une imprimante à jet d'encre continu, comportant :
- un circuit d'encre,
- une tête d'impression,
- des moyens de liaison hydraulique entre le circuit d'encre et la tête d'impression,
- des moyens de liaison électrique pour alimenter électriquement ladite tête d'impression,
- un dispositif selon l'invention, par exemple un dispositif d'authentification d'un élément consommable ou détachable, et/ un support de données, tel que décrit ci-dessus.

Une imprimante à jet d'encre continu selon l'invention peut comporter en outre au moins un élément consommable ou détachable selon l'invention, tel que décrit ci-dessus et dans la suite. Il peut en outre être muni d'un support de données telles que décrit ci-dessus.

### BRÈVE DESCRIPTION DES FIGURES

- La figure 1 représente une structure connue d'imprimante.
- la figure 2 représente une structure connue d'une tête d'impression d'une imprimante de type CIJ.
- La figure 3 représente schématiquement une imprimante et une cartouche d'encre, munie d'un tag, selon la présente invention.
- La figure 4 représente des détails de réalisation d'un contrôleur et d'un tag d'une cartouche d'encre, selon la présente invention.
- Les figures 5A et 5B représentent des étapes d'un procédé d'authentification selon un aspect de l'invention.
- Les figures 6A et 6B représentent des utilisations d'un tag selon un aspect de l'invention.
- La figure 7 représente des étapes de réalisation d'un tag selon un aspect de l'invention.
- Les figures 8A, 8B représentent des réalisations d'un autre aspect de l'invention, avec carte individuelle d'identification de l'imprimante.

### EXPOSÉ DÉTAILLÉ D'UN MODE DE RÉALISATION

On a représenté, très schématiquement, en figure 3, le corps 3 d'une imprimante et un consommable 20, par exemple une pièce détachée ou une cartouche d'encre ou de solvant. On appelle élément consommable un élément destiné à être renouvelé du fait de la diminution de son contenu ou de sa consommation, en vue de la réalisation d'une fonctionnalité de l'imprimante. Ce peut être aussi un élément pour lequel une autorisation d'utilisation est donnée de manière limitée dans le temps, par exemple un logiciel ou une fonctionnalité logicielle.

On appelle élément détachable un élément qui, pour satisfaire à la mise en œuvre d'une fonctionnalité de l'imprimante, doit lui être relié temporairement.

Dans la suite, on cite souvent l'exemple de la cartouche d'encre : elle peut être reliée à l'imprimante pour lui fournir de l'encre. La cartouche est à la fois consommable et détachable. Mais l'invention s'applique également à une pièce détachée, par exemple un filtre, ou une pompe, ou une électrovanne, ou tout autre module ou sous-ensemble de l'imprimante, par exemple un module amovible tel que décrit dans la demande PCT/EP2014/056215. Chacun de ces éléments a une durée de vie limitée, au bout de laquelle il doit être remplacé pour le bon fonctionnement de l'imprimante. Un autre exemple, décrit plus loin, est celui d'une carte d'authentification.

La machine, en fait son contrôleur, est équipée de moyens 30 de communication, par exemple de type RFID, qui vont permettre de dialoguer avec ce consommable. Et le contrôleur est programmé pour mettre en œuvre des étapes décrites ci-dessous.

Le consommable 20 est équipé d'un circuit 200 (par la suite appelé « tag ») qui lui permet de mettre en œuvre des étapes décrites ci-dessous. Ce circuit peut être par exemple réalisé sous la forme d'un processeur ou d'un microprocesseur, ou d'un FPGA. Ce circuit peut être programmé pour mettre en œuvre un procédé selon l'invention. Des moyens de communication sont également prévus, par exemple de type RFID, qui vont permettre de dialoguer avec le contrôleur. En variante, la communication entre le corps 3 de l'imprimante et le consommable 20 peut être de type par contact.

Dans ce cas, des contacts sont prévus sur chacun des circuits pour assurer la transmission des données entre les 2 circuits.

Dans les 2 cas, RFID et contact, un évènement va déclencher une 1^{ère} étape de dialogue, qu'il s'agisse de l'authentification ou de l'échange des données. C'est le cas lorsqu'il y a besoin d'utiliser l'élément consommable ou détachable, par exemple :
- lors du contrôle au démarrage de l'imprimante, celle-ci détectant la présence de l'élément consommable ou détachable, cette détection formant l' évènement ci-dessus,
- ou lors de la connexion de l'élément consommable ou détachable, provoquant une détection par le contrôleur qui déclenche alors un procédé selon l'invention,
- ou lorsque le besoin de l'élément se manifeste, par exemple lorsqu'un niveau bas de l'encre est détecté dans le réservoir principal, nécessitant de l'approvisionner par la cartouche d'encre.

Le circuit 201 est par exemple appliqué contre une paroi du consommable, de manière à faciliter le dialogue (ou l'échange de données) avec le contrôleur.

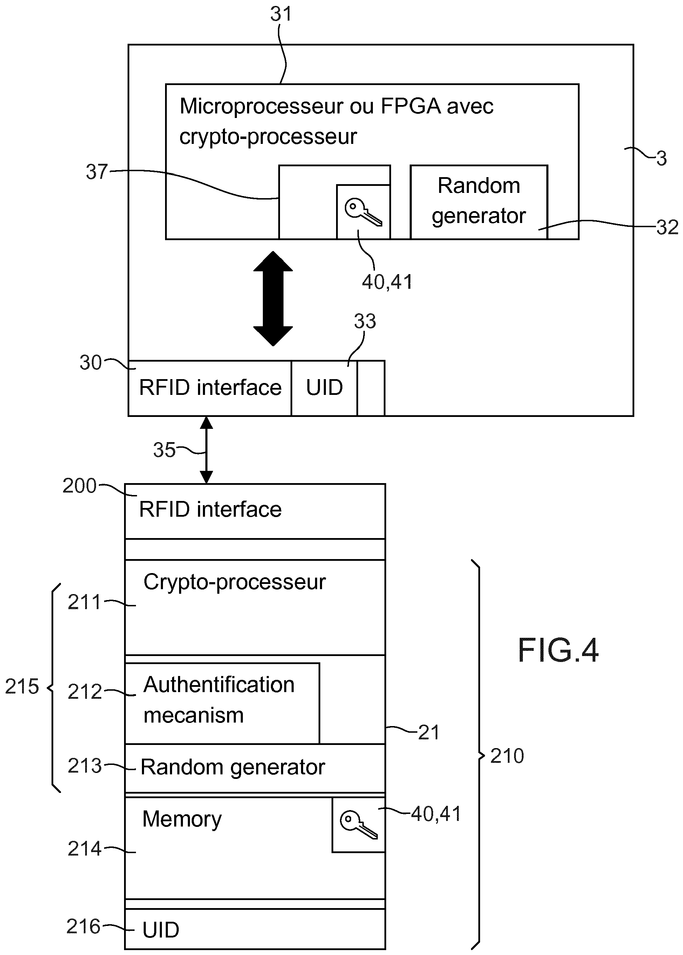

En figure 4, on a représenté de manière un peu plus détaillée un exemple de réalisation de cette architecture, dans sa version avec des moyens de communication de type RFID.

La référence 31 désigne un circuit du contrôleur 3, par exemple réalisé sous la forme d'un microprocesseur, ou d'un FPGA, programmé pour réaliser certaines fonctions, ou étapes de procédé. Par exemple, ce circuit 31 est muni de moyens 32 pour générer une ou des informations, par exemple des nombres, aléatoires. Ce circuit peut être muni de moyens 37 de mémorisation, pour mémoriser des données, et en particulier des données pour mettre en œuvre un procédé selon l'invention, par exemple des données relatives à une clé partagée 40 et/ou une clé secrète 41. Comme expliqué par la suite, le contrôleur peut ne pas comporter :
- de clé partagée, celle-ci ne lui étant fournie que lors de la réalisation d'un évènement tel que le début d'une session d'interaction avec le tag,
- ou de clé secrète, aucun processus d'authentification, du type décrit ci-dessous, n'étant alors mis en œuvre.

Une clé partagée peut être échangée, au moins en partie, entre le consommable et le contrôleur, en général après authentification comme expliqué ci-dessous.

Au cours d'un procédé selon l'invention, une clé secrète n'est pas échangée entre le consommable et le contrôleur.

Dans la présente demande, un algorithme met en œuvre une clé. Chaque algorithme est défini par un ensemble d'instructions, mémorisées dans le circuit correspondant 31, 210, qui codent des étapes de l'algorithme.

Ce circuit 31 va fournir, aux moyens 30, des données à transmettre au consommable (en fait : au circuit - décrit ci-dessous - associé au consommable), et/ou il reçoit, via les moyens 30, des données transmises par le même consommable (en fait : par le circuit - décrit ci-dessous - associé au consommable).

Du côté du consommable, la référence 200 désigne l'interface RFID du tag 21.

La référence 210 désigne un circuit du tag, , par exemple réalisé sous la forme d'un microprocesseur, ou d'un FPGA, qui est programmé pour réaliser certaines fonctions, ou étapes de procédé, selon l'invention. Par exemple, ce circuit 210 est muni de moyens, désignés globalement par la référence 215, comportant des moyens 213 pour générer une ou des informations, par exemple des nombres, aléatoires, des moyens 212 mettant en œuvre un procédé d'authentification et des moyens 211 de cryptage. Ce circuit peut être muni de moyens 214 de mémorisation, pour mémoriser des données, et en particulier des données pour mettre en œuvre un procédé selon l'invention par exemple des données relatives à une clé partagée 40 et/ou une clé secrète 41.

Ce circuit 210 va fournir, aux moyens 200, des données à transmettre au contrôleur 3, ou à mettre à disposition de ce dernier (par exemple afin qu'il puisse les lire) et/ou il reçoit, via les moyens 200, des données transmises par le circuit 31 et les moyens 30 du contrôleur.

La référence 35 symbolise les échanges de données entre le contrôleur et le tag du consommable. Comme indiqué ci-dessus, il s'agit ici d'un exemple avec un échange de données par mode RFID.

Selon une réalisation particulièrement intéressante, la clef partagée 40, qui est une clef différente de la clef secrète 41 (elle peut par exemple être plus facilement décodée que cette dernière) sert principalement, ou même uniquement, au cryptage des informations stockées dans la mémoire. La clef secrète 41 sert principalement, ou même uniquement, à l'authentification du consommable par le contrôleur ou à l'authentification réciproque du consommable et du contrôleur. On limite ainsi les risques de « piratage » c'est-à-dire d'utilisation non autorisée des données contenues dans le tag et, par voie de conséquence, du consommable associé.

La clé partagée peut être par exemple:
- déterminée, ou choisie, par le fabricant du contrôleur, par exemple lors de la fabrication de celui-ci ; éventuellement elle est variable dans le temps, par exemple périodiquement, le contrôleur pouvant alors avoir la liste des clés ou l'algorithme permettant de retrouver, à l'instant souhaité, la clé partagée à utiliser,
- ou fournie par le tag au contrôleur, seulement lorsque l'authentification a été validée.

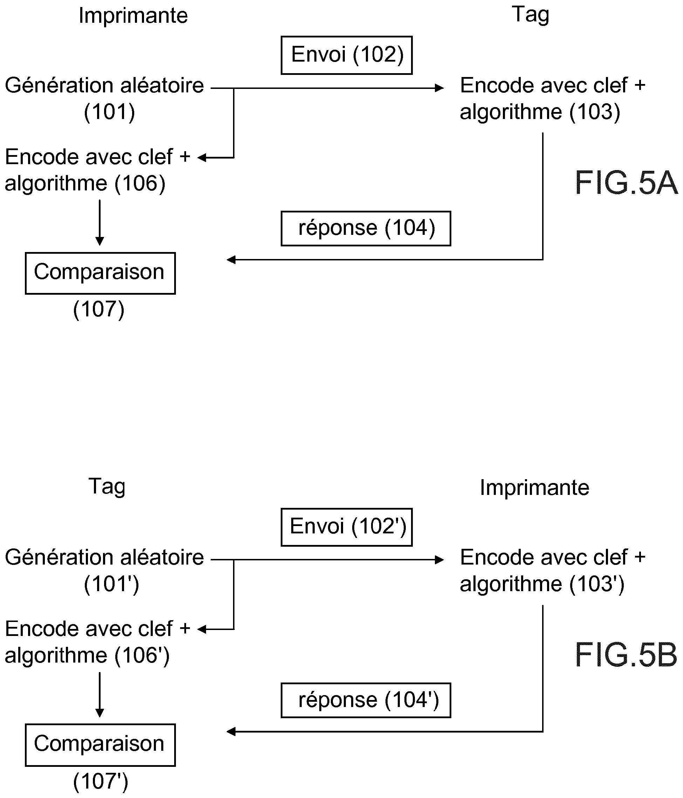

Un exemple d'un procédé, pouvant être mis en œuvre par ce système va être décrit, en liaison avec la figure 5A. Il s'agit d'un algorithme, ou d'un procédé, d'authentification, avant échange de données entre tag et contrôleur. Comme expliqué ci-dessous, certains procédés selon l'invention ne mettent pas en œuvre cette authentification préalable.

Selon cet exemple, tant le contrôleur de l'imprimante que le tag du consommable mémorisent et mettent en œuvre une clef secrète 41 et une clé partagée 40; un algorithme de cryptage met en œuvre la clé secrète, les données relatives à cet algorithme étant mémorisées, d'une part dans le contrôleur, d'autre part dans le tag.

A la réalisation d'un événement, par exemple l'un de ceux mentionnés ci-dessus, le contrôleur génère un 1er nombre (plus généralement : une information) aléatoire A (étape 101) qu'il envoie (étape 102) au tag de la cartouche ; celui-ci crypte ce nombre (étape 103) à l'aide de son algorithme de cryptage et de la clef secrète 41 et renvoie (étape 104) à l'imprimante ce nombre encrypté C(A).

Le contrôleur 3 réalise la même opération: il crypte ce même nombre (étape 106) à l'aide de son algorithme de cryptage et de la clef secrète 41, formant ainsi C'(A).

Le circuit du contrôleur 3 compare (étape 107) le résultat C'(A) obtenu par son calcul interne avec celui C(A) renvoyé par le tag.

Si C'(A) = C(A) (ou, plus généralement, si il est satisfait à une relation entre C(A) et C'(A), qui permet de conclure à leur accord ou correspondance), alors le tag - et le consommable associé - est authentique et des données, par exemple des données confidentielles contenues dans le tag, peuvent être échangées entre ce tag et le contrôleur. Ces données peuvent être qualifiées de données techniques d'utilisation (elles vont concerner des aspects ou des fonctionnalités techniques de la machine et/ou des aspects techniques de fonctionnement de la machine). Sinon, le tag, et le consommable auquel il est associé, est reconnu comme non authentique, et ces données ne peuvent être échangées entre ce tag et le contrôleur.

Plus généralement, lors de la mise en place de la pièce détachée ou avant de prélever un consommable (par exemple un fluide tel que de l'encre ou un solvant) dans une cartouche ou une bouteille, une authentification peut être réalisée de la manière qui vient d'être décrite.

Lors de la mise en œuvre de ce procédé d'authentification, la clé partagée 40 ne joue pas de rôle, seule la clé secrète est utilisée ; cette clé secrète permet d'autoriser la transmission d'informations du « tag » vers le contrôleur, et vice versa. À ce stade, en effet, des données (autres que celles relatives à la phase d'authentification) ne sont pas encore échangées. Il est donc possible de ne fournir la clé partagée, à l'un ou l'autre des 2 éléments (consommable, contrôleur), qu'après réussite de l'authentification.

Par exemple, elle est envoyée par le tag 20 au contrôleur 3 après authentification validée ou réussie. Ceci est très avantageux dans les réalisations dans lesquelles la clé partagée est modifiée : on n'a alors pas à reprogrammer les éléments (tag, contrôleur) qui la mettent en œuvre. Plus précisément, un consommable va lui-même fournir à l'imprimante la clé (partagée) qui va permettre de décoder les données échangées. Si cette clé a évolué ou a été modifiée (par exemple du fait d'évolutions techniques ou de modifications algorithmiques), il n'y a nul besoin d'intervenir sur l'imprimante, celle-ci récupère la nouvelle clé partagée lors de sa 1^{ère} interaction (après authentification) avec le nouveau consommable qui dispose, lui, de la clé partagée modifiée. En outre, aucun moyen de synchronisation des clés n'est mis en oeuvre.

Afin de protéger au mieux les données du tag, l'authentification peut être mutuelle et le tag peut à son tour générer un nombre aléatoire qu'il soumet à l'imprimante, selon le procédé de la figure 5B :
- le tag génère un nombre (plus généralement : une information) aléatoire A (étape 101') qu'il envoie (étape 102') au contrôleur; celui-ci crypte ce nombre (étape 103') à l'aide de son algorithme de cryptage et de la clef secrète 41 et renvoie (étape 104') au tag l'imprimante ce nombre crypté C(A),
- le contrôleur réalise la même opération: il crypte ce même nombre (étape 106') à l'aide de son algorithme de cryptage et de la clef secrète 41, formant ainsi C'(A),
- le tag compare (étape 107') le résultat C'(A) obtenu par son calcul interne avec celui C(A) renvoyé par le contrôleur.

Si C'(A) = C(A) (ou, plus généralement, si il est satisfait à une relation entre C(A) et C'(A), qui permet de conclure à leur accord ou correspondance), alors le tag peut échanger des données avec le contrôleur. Sinon, ce dernier est reconnu comme non authentique ou, plus généralement, non autorisé à échanger des données avec le contrôleur. On peut éventuellement procéder dans l'ordre inverse : on réalise d'abord le procédé décrit ci-dessus en lien avec la figure 5B puis celui décrit ci-dessus en lien avec la figure 5A.

D'une manière générale, dans le cas d'une authentification mutuelle, les 2 authentifications seront de préférence validées (respectivement par le contrôleur ou par le consommable) pour conclure à un échange possible de données entre le consommable et l'imprimante et autoriser un tel échange, et par suite l'utilisation du consommable.

Afin de diversifier la clef secrète 41, celle-ci peut être diversifiée ., par exemple à l'aide d'un algorithme. Par exemple encore, elle est combinée avec une information d'identification, cela peut être un numéro tel qu'un numéro de série ou un UID (numéro unique d'identification) 33 du contrôleur et/ou 216 du tag (figure 4), et/ou une date selon un algorithme.

En variante, la clef secrète 41 présente dans le tag et le contrôleur est alors modifiée à l'aide d'un algorithme en utilisant par exemple un autre nombre (disponible dans le tag et/ou l'imprimante), par exemple avant codage (étape 103, 103'.

Cette diversification, qui peut être appliquée à la clé partagée rend le système plus robuste car, de ce fait, la clef concernée n'est valable que pour ce tag, cette imprimante ou cette combinaison tag/imprimante.

A l'occasion (avant, pendant ou après celle-ci) de cette étape de diversification, le tag peut être amené à fournir au contrôleur les données utilisées pour la diversification.

Une variante du procédé d'authentification décrit ci-dessus peut être la suivante.

Le consommable communique au contrôleur un mot de passe ; le contrôleur compare ce mot de passe avec un mot de passe qu'il contient (et qui est enregistré dans les moyens de mémorisation du contrôleur) ; en fonction du résultat de la comparaison, l'utilisation du consommable est autorisée, ou non. Il peut en être de même avec un logiciel.

Une fois l'authentification réalisée avec succès, des données peuvent être échangées ou transférées entre le tag et le contrôleur, par exemple mises à la disposition de ce dernier par le tag. En général cet échange se fait à l'initiative du contrôleur, le tag mettant à la disposition de ce dernier et sur requête de celui-ci, des données qu'il lui envoie ou qu'il lui permet de lire.

Mais, selon un procédé encore plus performant en termes de sécurité, une fois l'authentification réalisée avec succès, le tag fournit la clé partagée 40 au contrôleur (respectivement au tag). En variante :
- le contrôleur fournit la clé partagée au tag,
- le contrôleur et le tag fournissent chacun une partie de la clé partagée, respectivement au tag et au contrôleur.

Après authentification on peut donc procéder, non seulement à l'échange de données, ce que permet la réalisation avec succès de l'authentification, mais aussi, et avant échange de données, à la communication d'au moins une partie de la clé partagée 40 qui va permettre de décoder ces données échangées. Ce peut être par exemple le cas lors d'une « session » (période - qui peut être très brève, par exemple de l'ordre de quelques minutes - pendant laquelle un tag et un contrôleur sont mis en relation ininterrompue), le contrôleur ne recevant la clé partagée que pour la session en question. Le début d'une session est par exemple la fin du processus d'authentification, la fin d'une session est par exemple tout autre évènement postérieur au début, par exemple une coupure de courant. Pour renforcer encore plus la sécurité, cette clé peut n'avoir été créée, par exemple par un processus aléatoire, que lors du début de cette session, ou, plus généralement, au début d'une période déterminée, lors de la réalisation d'un évènement ou d'un évènement déterminé, par exemple l'un de ceux mentionnés ci-dessus. Un telle clé temporaire peut avoir éventuellement, par rapport à une clé partagée permanente, une longueur ou un encombrement réduit : la taille de mémoire pour la stocker est réduite ; et le temps de calcul de toute opération la mettant en œuvre est également réduit.

Selon une réalisation, la clef partagée 40 peut être variable dans le temps. Dans ce cas, les moyens 31 et/ou 210 contiennent des moyens, logiciels et/ou circuit programmé selon un algorithme, pour faire évoluer cette clé 40 dans le temps.

Comme précédemment, la clef secrète reste de préférence dédiée à l'authentification.

On a également donné ci-dessus l'exemple d'une clé partagée créée lors de la réalisation d'un évènement (au début d'une session ou lors d'un autre évènement déterminé).

Le procédé décrit ci-dessus permet de garantir l'aspect authentique du consommable et/ou d'une pièce détachée et l'inviolabilité des données stockées dans ce tag.

L'algorithme ou le procédé exposé ci-dessus peut être mis en œuvre, par l'imprimante, à l'aide de son contrôleur, programmé à cet effet, et par le tag, également programmé à cet effet.

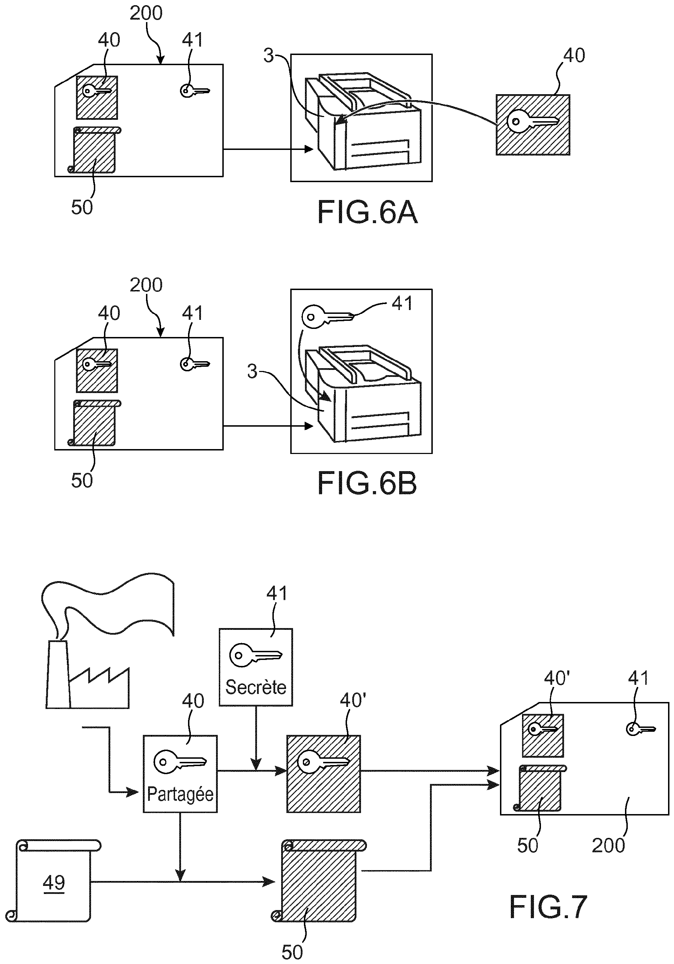

Deux exemples différents d'utilisation selon l'invention vont être donnés, en lien avec les figures 6A et 6B.

Dans les 2 cas, on utilise un tag 200 selon l'invention, du type illustré en figure 4 et munie d'une clé secrète 41 et d'une clé partagée 40. Le tag contient en outre des données 50, destinées à être échangées avec le contrôleur.

Le contrôleur de l'imprimante de la figure 6A ne dispose que de la clé partagée 40, installée dans le contrôleur avant tout contact avec un tag 200 (la clé partagée peut néanmoins, dans ce cas également, évoluer dans le temps). Aucun procédé d'authentification ne peut donc être mis en œuvre et les données 50 sont échangées entre le tag 200 et le contrôleur sans authentification, bien que le tag dispose, lui, de la clé secrète et de la clé partagée.

Selon une autre utilisation, le contrôleur de l'imprimante de la figure 6B dispose de la clé secrète 41. Il peut donc mettre en œuvre d'abord un procédé d'authentification, puis les données 50 sont échangées entre le tag 200 et le contrôleur 3 après validation de l'authentification. Comme expliqué ci-dessus, la clé partagée 40 peut être fournie au contrôleur après authentification et/ou être variable dans le temps.

Par conséquent, un tag selon l'invention est compatible avec un contrôleur simple (cas de la figure 6A), muni d'une clé partagée mais pas de clé secrète, ou avec un contrôleur plus évolué (cas de la figure 6B), muni d'une clé secrète et éventuellement de la clé partagée.

D'une manière générale, le fait de disposer, dans le tag, d'une clé partagée 40 et de la clé secrète 41 permet :
- de crypter les données 49, à insérer dans le tag sous forme de données cryptées 50, à l'aide de l'algorithme de la clé partagée 40,
- et/ou de crypter la clé partagée 40 à l'aide de l'algorithme de la clé secrète 41, en particulier si la zone mémoire contenant la clé partagée est accessible en lecture.

Un exemple d'un procédé de préparation ou de fabrication d'un tag 200 est illustré en figure 7, dans lequel :
- des données 49, à mémoriser dans le tag, sont cryptées à l'aide de la clé partagée 40 (pas encore cryptée par la clé secrète, voir ci-dessous); la référence 50 désigne les données cryptées et mémorisées dans le tag,
- la clé partagée 40 est cryptée à l'aide de l'algorithme de la clé secrète 41, pour former la clé partagée 40' mémorisée dans le tag 200.

Le tag peut donc contenir des données cryptées 50, la clé secrète 41 et la clé partagée 40, cette dernière étant éventuellement cryptée par la clé secrète (et étant alors stockée sous la forme 40').

Un tel procédé peut être réalisé par le fabricant d'imprimante et/ou de consommables.

Un exemple de fabrication ou de préparation d'un élément consommable selon l'invention et d'une imprimante selon l'invention peut être le suivant:
1. Préparation du consommable :
   On stocke, dans le tag :
   - le 1^{er} algorithme d'authentification et la 1ère clé d'authentification
   - et le 2ème algorithme et la 2ème clé, dite partagée, éventuellement variable et/ou éventuellement encryptée en utilisant la 1ère clé,
   - les données encryptées (par la clé partagée),
2. Préparation de l'imprimante:
   On stocke, dans l'imprimante (ou son contrôleur):
   - le 1^{er} algorithme d'authentification et la 1ère clé d'authentification
   - et le 2ème algorithme et la 2ème clé, dite partagée, éventuellement variable et/ou éventuellement encryptée en utilisant la 1ère clé (cas de la figure 7).

Après ces étapes de fabrication ou de préparation, un processus d'authentification peut être réalisé, comme déjà expliqué ci-dessus.

Lors d'un processus d'échange de données entre imprimante (contrôleur) et tag 200, des données peuvent être envoyées de l'imprimante (ou du contrôleur), au tag, ces données ayant été cryptées à l'aide de la clé partagée. Des données envoyées par le tag au contrôleur sont lues (décryptées) par ce dernier, également à l'aide de la clé partagée. La clé partagée est également utilisée dans le tag pour envoyer des données au contrôleur ou pour lire ou écrire les données envoyées par le contrôleur.

Des exemples sont donnés plus loin concernant la nature des données 49 (ou données d'utilisation) mémorisées dans le tag et qui peuvent être envoyées au contrôleur.

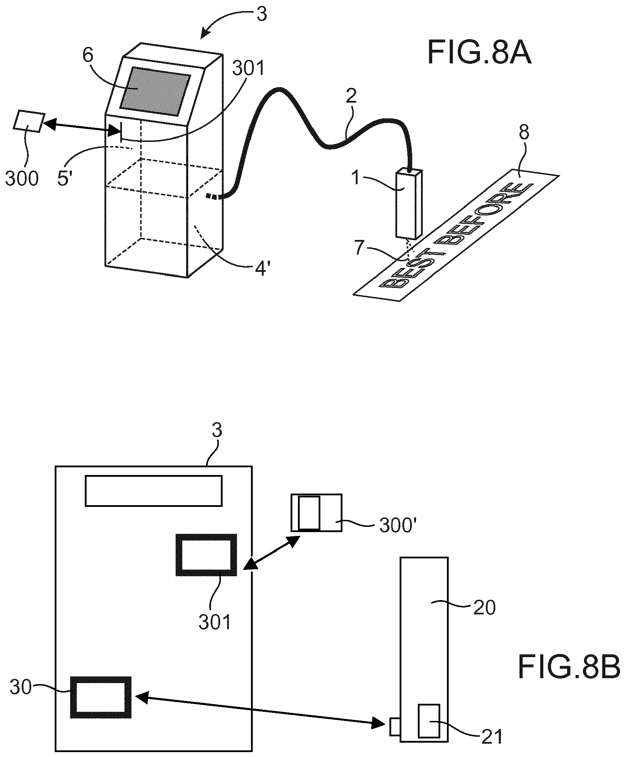

Selon une autre réalisation, schématisée en figures 8A et 8B, l'algorithme ou le procédé exposé ci-dessus peut être mis en œuvre, par la machine, à l'aide d'une carte d'authentification 300, 300' qui lui est associée. Par carte on entend également tout type de support de données (clé USB, ROM, RAM, mémoire flash, support optique tel que CD, ou support magnétique... etc).. Cette carte 300, 300' est un élément consommable ou détachable au sens expliqué ci-dessus. Mais elle est différente d'un autre élément consommable ou détachable, tel qu'une cartouche ou une pièce détachée ou un logiciel, dont elle va permettre l'authentification.

Cette carte contient ou comporte des moyens de communication, par exemple de type RFID, qui vont permettre de dialoguer avec le contrôleur. En variante, la communication entre le corps 3 de l'imprimante et la carte peut être de type par contact.

Cette carte va être, elle-même, soumise à un processus d'authentification tel qu'il a été décrit ci-dessus. Elle peut donc contenir les données qui vont permettre de réaliser un tel procédé d'authentification ; par exemple, elle comporte un circuit, tel que le circuit 200 qui a été décrit ci-dessus, lequel va contenir les données qui vont permettre de réaliser un tel procédé d'authentification.

Elle peut par exemple contenir au moins une partie des informations ou des données qui vont être transmise au contrôleur, ou échangées avec celui-ci, par exemple à la requête de ce dernier, et permettre à celui-ci de mettre en œuvre les étapes décrites ci-dessus.

Comme décrit ci-dessus, la machine (ou l'imprimante) est alors équipée des moyens de communication, par exemple de type RFID, ou encore par contact, qui vont permettre de dialoguer avec les éléments tels que les consommables. Mais, selon un exemple de réalisation, la carte 300, 300' contient les informations de cryptage qui vont permettre de mettre en œuvre les étapes décrites ci-dessus. Cette carte génère par exemple les nombres aléatoires en vue du cryptage, qui sont transmis au contrôleur, lequel les transmet au tag du consommable 20. Celui-ci effectue les opérations de cryptage et renvoie (étape 104) l'information cryptée au contrôleur, lequel la transmet à la carte 300, 300'. Celle-ci a réalisé son propre cryptage (étape 106) et dispose des moyens qui vont lui permettre d'effectuer l'étape de comparaison (étape 107). Elle délivrera ensuite au contrôleur, ou non, une autorisation d'utilisation du consommable 20.

En variante, les échanges se font uniquement, ou principalement, avec le contrôleur, qui effectue lui-même les comparaisons entre les données de la carte 300, 300', d'une part, et de l'élément consommable 20, d'autre part. Le contrôleur valide alors l'utilisation de l'élément consommable s'il a, d'une part, authentifié cet élément (selon le processus d'authentification tel que décrit ci-dessus), et, d'autre part, après authentification de la carte 300, 300' selon un procédé d'authentification tel que décrit ci-dessus pour les éléments consommables, obtenu l'autorisation d'utiliser le consommable par les données échangées avec la carte. L'ordre des étapes peut alors être :
a) authentification de la carte 300, 300', selon l'un des procédés décrits ci-dessus,
b) authentification du consommable 20, selon l'un des procédés décrits ci-dessus,
c) lecture, par le contrôleur, d'au moins une donnée de la carte concernant l'utilisation possible du consommable 20 ou de la pièce détachée.

Selon encore un autre exemple, la carte 300, 300' contient des données qui vont permettre, après authentification de la carte, d'autoriser, non, l'utilisation d'un logiciel ou d'une fonctionnalité logicielle ou d'une fonctionnalité de la machine d'impression.

Selon encore un autre exemple, la carte 300, 300' contient :
- d'une part des données qui vont permettre d'autoriser, ou non, l'utilisation d'un consommable 20 ou d'une pièce détachée,
- et, d'autre part des données qui vont permettre, d'autoriser, ou non, l'utilisation d'un logiciel ou d'une fonctionnalité logicielle ou d'une fonctionnalité de la machine d'impression (par exemple : des droits d'utilisation de l'imprimante).

La carte 300, 300' peut avantageusement contenir un ensemble de données techniques qui ne seront valables que pour une imprimante donnée. Cela évite, pour une imprimante déjà installée, de créer un nouveau programme, ou une nouvelle configuration, dès lors que des données techniques relatives à l'imprimante en question sont modifiées. Selon un autre exemple, cela permet de créer un ensemble de données pour un nouveau client, qui achète une imprimante : ce n'est pas celle-ci qui est directement configurée, mais la carte 300, 300'.

En figure 8A on a représenté le cas d'une carte 300 destinée à être lue par contact par l'imprimante 3, la carte est alors insérée dans une fente 301 du corps de l'imprimante, pour venir en contact avec un circuit de lecture.

En figure 8B on a représenté le cas d'une carte 300' destinée à être lue par RFID par l'imprimante 3, qui possède un lecteur RFID 301 dédié à la lecture de la carte 300'.

Dans les 2 cas, les données transmises de la carte à l'imprimante peuvent être du type décrit ci-dessous.

Le consommable 20 (figure 8B) est, dans les 2 cas, encore équipé du tag 21 qui lui permet de mettre en œuvre les étapes décrites ci-dessus et des moyens de communication, par exemple de type RFID, qui vont permettre de dialoguer avec le contrôleur.

La carte 300, 300' est un élément détachable de l'imprimante, qui va permettre une autorisation en 2 temps, la carte servant, d'une part, d'intermédiaire pour autoriser l'utilisation d'un consommable (après avoir été elle-même authentifiée), ce dernier étant, d'autre part, authentifié selon l'un des procédés déjà décrits ci-dessus.

En variante, la carte 300,300', après authentification par le contrôleur, peut permettre l'autorisation d'un élément consommable ou détachable ne disposant pas de moyens d'authentification. L'autorisation, par le contrôleur, passe alors soit par une identification de données techniques disponibles sur l'élément consommable, par exemple dans un tag ou une mémoire présent sur celui-ci, soit par des données rentrées dans l'imprimante par l'utilisateur, par exemple par lecture d'une étiquette d'identification disponible sur l'élément ou d'une donnée fournie avec celui-ci (sur l'emballage, document papier joint à l'élément, ...).

L'ordre des étapes peut alors être, par exemple :
a) authentification de la carte 300, 300', selon l'un des procédés décrits ci-dessus,
b) lecture, par le contrôleur, d'au moins une donnée de la carte 300, 300' (ou fournie par celle-ci) concernant l'utilisation possible du consommable 20 ou de la pièce détachée.

Une utilisation particulière de la carte 300, 300' permet de résoudre le problème d'un utilisateur qui souhaite, par exemple, utiliser des pièces détachées ou des consommables (encres) en provenance d'un tiers fabricant (par exemple dans le cas d'une encre présentant des propriétés très spécifiques) et /ou de réseau de distribution pour lesquels la politique de protection des consommables doit être adaptée.

Pour ce faire, on peut réaliser une configuration de la carte 300, 300' machine par machine.

D'une manière générale, cette carte, ou un tag tel que décrit précédemment, peut contenir au moins une donnée, ou donnée technique d'utilisation, relatives à la configuration de l'imprimante et son comportement attendu, et/ou au moins une information à sauvegarde sécurisée.

On peut par exemple trouver, dans ces données techniques d'utilisation, au moins une donnée ou information concernant:
a) - au moins une liste de consommables que l'imprimante peut utiliser,
b) - et/ou l'utilisation possible, ou non, d'au moins un consommable et/ou d'au moins une pièce détachée d'un tiers fabricant,
c) - et/ou l'autorisation d'utilisation, ou non, d'au moins un consommable et/ou d'au moins une pièce détachée non reconnu(e),
d) - et/ou au moins une possibilité d'utilisation d'au moins un logiciel activé dans le contrôleur de l'imprimante,
e) - et/ou des options de matériel ou d'un ou plusieurs périphérique(s) implémentés sur l'imprimante, par exemple un type de circuit d'encre et/ou de tête,
f) - et/ou des droits d'utilisation de l'imprimante : c'est le cas, par exemple, pour une option de type «pay-per-print », selon laquelle un utilisateur verra sa facturation calculée en fonction du nombre d'impressions réalisées. Dans ce cas, la carte contient une information relative à un nombre maximal d'impressions autorisées et le contrôleur va, après chaque impression, décrémenter, dans la carte, ce nombre maximal,
g) - et/ou, plus généralement, une ou des données spécifiques au fonctionnement de l'imprimante. De telles données peuvent être, par exemple :
   * des données de séquence de charge des gouttes par les électrodes de charge de la tête d'impression de l'imprimante, par exemple en fonction des différentes conditions d'impression, notamment la vitesse d'impression, ou en fonction de diverses configurations d'impression,
   * et/ou des données techniques relatives à l'impression d'un message donné,
   * et/ou des données relatives à l'utilisation d'une fonte d'impression particulière, et/ou, plus généralement, relatives à l'autorisation de l'accès à certaines fonctions de l'imprimante.

Ces données peuvent être lues par le contrôleur de l'imprimante. Celui - ci va, en fonction des données lues, permettre, ou pas, l'utilisation envisagée.

Par exemple, l'information concernant au moins une liste de consommables que la machine peut utiliser permet de garantir à l'utilisateur qu'uniquement un consommable compatible avec son imprimante pourra être utilisée : si un consommable, qui ne fait pas partie de la liste en question, vient à être utilisé, une ou plusieurs fonctionnalités de machine peut être bloquée(s). C'est un avantage pour l'utilisateur, qui évitera ainsi d'utiliser une encre, ou une tête d'impression, dont les qualités sont insuffisantes ou incompatibles pour l'imprimante utilisée.

L'information concernant l'autorisation d'utilisation d'au moins un consommable et/ou d'au moins une pièce détachée d'un tiers fabricant permet l'utilisation, ou l'interdiction d'utilisation, de celui-ci ou de celle-ci, alors que cette pièce détachée ou ce consommable est non équipé de tag ou est équipé d'un tag autre, pour une autre imprimante, ou est équipé d'un tag pour autoriser, uniquement, une autre application spécifique. Dans le cas où il est non équipé d'un tag, une action manuelle de l'opérateur peut permettre l'utilisation du consommable ou de la pièce en question.

L'information concernant l'autorisation d'utilisation, ou non, d'au moins un consommable non reconnu et/ou d'au moins une pièce détachée non reconnue permet l'utilisation, ou l'interdiction d'utilisation, d'au moins une pièce détachée, ou d'au moins un consommable, alors que cette pièce détachée ou ce consommable est non connu par le fabriquant de la machine.

L'information concernant au moins une possibilité d'utilisation d'au moins un logiciel (ou une fonctionnalité logicielle) spécifique, dans le contrôleur de l'imprimante, permet l'utilisation, ou l'interdiction d'utilisation, de ce logiciel ou de cette fonctionnalité logicielle: par exemple, lors de la fabrication, le contrôleur d'une imprimante est équipé d'un premier logiciel L1 et d'un deuxième logiciel L2, différent de L1 par au moins son écriture ou une de ses fonctionnalités. Le tag spécifique ne donne l'autorisation d'utiliser que le premier logiciel L1. Le deuxième logiciel L2 ne pourra donc pas être utilisé.

Un exemple d'autorisation d'utilisation de logiciel ou de fonctionnalité logicielle correspond à l'utilisation de fonctionnalités permettant des impressions spécifiques. De telles impressions spécifiques peuvent être de type anti-contrefaçon, pour lesquelles la limitation d'une ou plusieurs fonctionnalités logicielles permet d'éviter la copie d'un marquage anti-contrefaçon. Ce type d'application peut être mis en œuvre à l'aide d'une carte telle que la 300, 300' qui contient l'information relative à l'autorisation d'utilisation d'un ou plusieurs logiciel(s).

L'information concernant un ou des droits d'utilisation de l'imprimante va permettre d'adapter le fonctionnement de l'imprimante, et notamment de la mémorisation de données, en fonction des droits de l'utilisateur. Par exemple, pour une option de type «pay-per-print », le contrôleur 20 va mémoriser le nombre d'impressions réalisées.

Un exemple de ce type de droit concerne l'affranchissement d'enveloppes, pour lequel l'utilisateur paie en fonction du nombre d'impressions réalisées. Une carte, telle que la carte 300, 300' peut autoriser l'imprimante à réaliser le nombre d'impression stocké dans la carte.

Un autre exemple d'application est le suivant : l'imprimante est alors couplée à un système de relecture ; ce système comporte par exemple un dispositif d'imagerie pour prendre au moins une image d'un moins une partie d'un motif imprimé par l'imprimante, couplé à des moyens pour comparer ladite image à une image de référence, qui peut par exemple être mémorisée ou à des données de référence, qui peuvent par exemple être mémorisées. Ainsi on peut vérifier la qualité d'une impression. Une telle application peut être autorisée lors de la fabrication de l'imprimante ou être autorisée plus tard chez le client grâce à l'utilisation d'une carte 300.

De tels logiciels ou fonctionnalités logicielles peuvent être déjà présents dans l'imprimante et autorisés par une carte 300, 300' après authentification de celle-ci; ou être stockés dans la carte et transmis à l'imprimante après authentification.

Dans le cas d'une carte d'identification 300, 300', celle-ci peut évoluer dans le temps ; par exemple une carte d'identification peut être mise à jour, ou bien une nouvelle carte d'identification peut-être remise au détenteur d'une carte d'identification, afin d'actualiser une ou plusieurs données, du type de celles mentionnées ci-dessus.

Cette carte d'identification est générée, par exemple par le constructeur de la machine (voir figure 7) et/ou lors d'une évolution de configuration de l'imprimante. Afin de garantir que la carte d'identification n'est utilisable que sur une imprimante donnée, lors de la première mise en place dans l'imprimante, une association de la carte avec le matériel de l'imprimante est réalisée par sauvegarde d'identifiant dans la carte correspondant à cette machine particulière. Une fois enregistrées, ces données ne peuvent être modifiées et la carte est réservée à une utilisation sur cette machine particulière.

Cette solution offre la possibilité de configurer facilement et de manière sécurisée les fonctionnalités de l'imprimante, en fin de ligne de production ou même directement chez un utilisateur. Autrement dit, on peut fabriquer une machine unique et faire varier son utilisation par un utilisateur en fonction des données de la carte 300, 300'.

Ce qui vient d'être décrit ci-dessus pour une carte est également applicable à un élément consommable, par exemple une cartouche ou une pièce détachée, son « tag » ou son circuit 200 contenant au moins une information de l'un des types a) - g) mentionné ci-dessus, par exemple relative à au moins un autre consommable, par exemple une cartouche ou une pièce détachée, que la machine peut utiliser.

Un circuit d'encre d'une imprimante à jet d'encre, avec ses éventuelles cartouches d'encre et de solvant, est décrit par exemple dans le document FR 13 52925 (WO2014/154830) ou WO2009/047510.

Rappelons que le circuit d'encre réalise principalement les fonctions suivantes :
* fourniture d'encre de qualité adéquate sous pression au générateur de gouttes de la tête 1,
* récupération et recyclage des fluides non utilisés pour imprimer en retour de la gouttière de la tête 1,
* aspiration pour la purge du générateur de gouttes situé dans la tête 1,
* fourniture de solvant à la tête 1 pour le rinçage effectué pendant les opérations de maintenance de la tête.

L'une et/ou l'autre des cartouches de ce circuit peut être munie d'un tag selon la présente invention. Un contrôleur de l'imprimante peut être du type décrit ci-dessus.

L'invention peut être mise en œuvre dans une imprimante à jet d'encre continu (CIJ) telle que celle décrite ci-dessus en liaison avec les figures 1 et 2. Celle-ci comporte notamment une tête d'impression 1, généralement déportée par rapport au corps de l'imprimante 3, et reliée à celui-ci par des moyens, par exemple sous forme d'un ombilic 2 souple, rassemblant les liaisons hydrauliques et électriques permettant le fonctionnement de la tête.

L'invention peut être avantageusement appliquée à une imprimante qui n'est pas reliée à un réseau de communication tel qu'internet.

## Revendications

1. Support de données (300, 300') pour une imprimante à jet d'encre continu (CIJ), ce support de données comportant :
- des moyens (31, 32, 30) pour recevoir une 1^{ère} information aléatoire de l'imprimante,,
- des moyens (31) pour crypter cette 1^{ère} information aléatoire, par un 1^{er} algorithme de cryptage, et une 1^{ère} clé secrète, formant ainsi une 1^{ère} information aléatoire cryptée,
- des moyens (37, 31) de mémorisation mémorisant au moins une donnée concernant au moins un consommable, différent dudit support de données, ou au moins une pièce détachée que l'imprimante peut utiliser, et/ou au moins un logiciel que l'imprimante peut utiliser et/ou au moins un mode d'utilisation que l'imprimante peut mettre en œuvre et/ou des options de matériel ou d'un ou plusieurs périphérique(s) implémentés sur l'imprimante, et/ou des droits d'utilisation de l'imprimante et/ou, plus généralement, une ou des données spécifiques au fonctionnement de l'imprimante ;
- des moyens de communication avec l'imprimante, pour envoyer ladite 1^{ère} information aléatoire cryptée à l'imprimante, et pour envoyer ladite au moins une donnée à l'imprimante ou pour lecture de ladite au moins une donnée par l'imprimante.

2. Support de données selon la revendication 1, lesdits moyens de communication comportant des moyens de type RFID ou des moyens d'échange de données par contact.

3. Support de données, selon la revendication 1 ou 2 , comportant en outre des moyens (37, 31) pour :
* comparer au moins une donnée d'identification d'un consommable ou d'une pièce détachée ou d'un logiciel avec ladite au moins une donnée mémorisée concernant au moins un consommable ou au moins une pièce détachée que l'imprimante peut utiliser, et/ou au moins un logiciel que l'imprimante peut utiliser,
* et/ou comparer au moins un mode d'utilisation, avec ladite au moins une donnée mémorisée concernant au moins un mode d'utilisation que l'imprimante peut mettre en œuvre,
* et/ou autoriser, ou non, l'utilisation de ce consommable ou de cette pièce détachée ou de ce logiciel ou la mise en oeuvre dudit mode d'utilisation.

4. Support de données, selon l'une des revendications 1 à 3, comportant en outre des moyens (31) pour recevoir au moins une partie d'une clé, dite clé partagée, envoyé par ladite imprimante.

5. Support de données, selon l'une des revendications 1 à 4, lesdits moyens (37, 31) de mémorisation mémorisant:
* des données de séquence de charge des gouttes par les électrodes de charge de la tête d'impression de l'imprimante, par exemple en fonction des différentes conditions d'impression, notamment la vitesse d'impression;
* et/ou des données techniques relatives à l'impression d'un message donné ;
* et/ou des données relatives à l'utilisation d'une fonte d'impression particulière, et/ou, plus généralement, relatives à l'autorisation de l'accès à certaines fonctions de l'imprimante.

6. Support de données selon l'une des revendications 1 à 5, lesdits moyens (37, 31) de mémorisation mémorisant des données concernant au moins un logiciel que l'imprimante peut utiliser pour réaliser des impressions anti-contrefaçon.

7. Support de données selon l'une des revendications 1 à 6, lesdits moyens (37, 31) de mémorisation mémorisant au moins une donnée concernant un type de circuit d'encre et/ou de tête implémenté sur l'imprimante.

8. Support de données selon l'une des revendications 1 à 7, comportant en outre :
- des moyens (31, 32, 30) pour générer une 2^{ème} information aléatoire, et pour l'envoyer à un circuit d'authentification de l'imprimante,
- des moyens (31) pour crypter cette 2^{ème} information aléatoire et générer une 2^{ème} information aléatoire cryptée, pour effectuer une comparaison entre ladite 2^{ème} information aléatoire cryptée et une 3^{ème} information aléatoire cryptée reçue de l'imprimante, et pour authentifier l'imprimante en fonction du résultat de la comparaison, si ladite 2^{ème} information aléatoire cryptée et ladite 3^{ème} information aléatoire cryptée reçue sont identiques, ou pour ne pas authentifier ladite imprimante si ladite 2^{ème} information aléatoire cryptée et ladite 3^{ème} aléatoire cryptée reçue ne sont pas identiques.

9. Imprimante à jet d'encre continu, comportant :
- un circuit d'encre,
- une tête d'impression (1),
- des moyens de liaison hydraulique entre le circuit d'encre et la tête d'impression,
- des moyens de liaison électrique pour alimenter électriquement ladite tête d'impression,
- un support de données selon l'une des revendications 1 à 8.

10. Imprimante à jet d'encre continu selon la revendication 9, comportant en outre un contrôleur (3) et au moins un élément consommable ou détachable.

11. Imprimante selon la revendication 10, ledit contrôleur (3) comportant :
- des moyens (31, 32, 30) pour générer une 2^{ème} information aléatoire, et pour l'envoyer audit support de données,
- des moyens (31) pour crypter cette 2^{ème} information aléatoire, par un 2^{ème} algorithme de cryptage, et une 2^{ème} clé secrète, formant ainsi une information aléatoire cryptée,
- des moyens (31) pour effectuer une comparaison entre cette 2^{ème} information aléatoire cryptée et ladite 1^{ère} information aléatoire cryptée reçue dudit support de données et pour authentifier, ou pas, ledit support de données en fonction du résultat de la comparaison.

12. Imprimante à jet d'encre continu selon la revendication 10 ou 11, comportant :
- des moyens (32) pour générer une 2^{ème} information aléatoire, et des moyens (30) pour envoyer cette information aléatoire audit élément consommable ou détachable,
- des moyens (31) pour crypter cette 2^{ème} information aléatoire générée par lesdits moyens (213), par un 2^{ème} algorithme de cryptage et par une 2^{ème} clé, dite clé secrète (41), formant ainsi une 2^{ème} information aléatoire cryptée,
- des moyens (215) pour effectuer une comparaison entre cette 2^{ème} information aléatoire cryptée et une autre information aléatoire cryptée, reçue dudit élément consommable, et pour authentifier ledit élément consommable en fonction du résultat de la comparaison si ladite 2^{ème} information aléatoire cryptée et ladite autre information aléatoire cryptée reçue sont identiques, ou ne pas authentifier ladite imprimante si ladite 2^{ème} information aléatoire cryptée et ladite autre information aléatoire cryptée reçue ne sont pas identiques.

13. Imprimante selon la revendication 10 à 12, ledit élément consommable ou détachable étant une cartouche d'encre ou de solvant ou un filtre, ou une pompe, ou une électrovanne, ou un module amovible, par exemple du circuit d'encre de l'imprimante ou d'une tête d'impression de l'imprimante.

14. Procédé d'authentification d'un support de données (300, 300') d'une imprimante à jet d'encre continu (CIJ), comportant :
a) - la génération, par le contrôleur (3) de l'imprimante, d'une 1^{ère} information aléatoire, et son envoi à un circuit d'authentification (31) dudit support de données,
b) - le cryptage de cette 1^{ère} information aléatoire, par ce circuit d'authentification dudit support de données, par un 1^{er} algorithme de cryptage, et une 1^{ère} clé secrète, formant ainsi une 1^{ère} information aléatoire cryptée, et son envoi au contrôleur (3) de l'imprimante,
c) - le cryptage de cette 1^{ère} information aléatoire, par le contrôleur de l'imprimante, par un 2^{ème} algorithme de cryptage, et une 2^{ème} clé secrète, formant ainsi une 2^{ème} information aléatoire cryptée,
d) - la comparaison, au moins, de la 1^{ère} information aléatoire cryptée et de la 2^{ème} information aléatoire cryptée,. pour authentifier, ou pas, le 1^{er} élément consommable, si la 1^{ère} information aléatoire cryptée et la 2^{ème} information aléatoire cryptée sont identiques, le 1^{er} algorithme de cryptage et le 2^{ème} algorithme de cryptage étant identiques, ainsi que la 1^{ère} clé secrète et la et 2^{ème} clé secrète.

15. Procédé selon la revendication 14, comportant, après authentification dudit support de données par le contrôleur, l'échange, entre ledit support de données et le contrôleur, d'au moins une donnée concernant au moins un consommable, différent dudit support de données, ou au moins une pièce détachée que l'imprimante peut utiliser, et/ou au moins un logiciel que l'imprimante peut utiliser et/ou au moins un mode d'utilisation que l'imprimante peut mettre en œuvre et/ou des options de matériel ou d'un ou plusieurs périphérique(s) implémentés sur l'imprimante, et/ou des droits d'utilisation de l'imprimante et/ou, plus généralement, une ou des données spécifiques au fonctionnement de l'imprimante ;
- des moyens de communication avec l'imprimante, pour envoyer ladite 1^{ère} information aléatoire cryptée à l'imprimante, et pour envoyer ladite au moins une donnée à l'imprimante ou pour lecture de ladite au moins une donnée par l'imprimante.
